# EUROPEAN PATENT APPLICATION

(11) **EP 4 164 277 A1**
(43) Date of publication of application: **12.04.2023**
(21) Application number: 21822367.5
(22) Date of filing: 26.05.2021
(51) Int. Cl.: H04W 24/02

(54) **PROTOCOL DATA UNIT PROCESSING METHOD AND APPARATUS, SENDING DEVICE AND STORAGE MEDIUM**

(30) Priority: 08.06.2020 CN 202010515069
(71) Applicant: Sanechips Technology Co., Ltd., Shenzhen, Guangdong 518055 (CN)
(72) Inventor: XU, Chaoxiang, Shenzhen, Guangdong 518057 (CN)
(74) Representative: Ipsilon
(86) International application number: PCT/CN2021/096026
(87) International publication number: WO 2021/249190

(57) **Abstract**

The present disclosure provides a protocol data unit processing method and device, a transmitting device and a storage medium. The method includes: receiving a status protocol data unit comprising data protocol data units; determining a processing capability for the data protocol data units in a current time unit according to capability parameters; and processing the data protocol data units in the current time unit and a next time unit according to the processing capability. The method can allocate the data protocol data units to different time units according to the processing capability for processing, thereby reducing processing pressure in time units, and improving reliability of processing of the data protocol data units.

## Description

### TECHNICAL FIELD

Embodiments of the present disclosure relate to wireless communication networks, and in particular, to a Protocol Data Unit (PDU) processing method and device, a transmitting device, and a storage medium.

### BACKGROUND

In a New Radio (NR) network, a status packet of a data plane may be lost, for example, a status PDU is lost on a Radio Link Control (RLC) layer, or a control PDU is lost on a Packet Data Convergence Protocol (PDCP) layer. The lost status PDU will be superimposed in a next status PDU, resulting in a proliferation of to-be-processed data PDUs included in the status PDU of the data plane. In addition, when signals are weak, a Hybrid Automatic Repeat reQuest (HARQ) failure rate is high, which may also result in excessive to-be-processed data PDUs included in the status PDU of the data plane.

A device which processes and transmits the data PDUs is referred to as a transmitting device. The transmitting device may be a device at a network side or a User Equipment (UE). Correspondingly, a device which receives the data PDUs is referred to as a receiving device. The receiving device can inform the transmitting device of a message of successful reception of an RLC data PDU or a message of detection of a lost RLC data PDU by transmitting the status PDU of the RLC layer. In a case where the status packet of the data plane is lost and the status PDU includes excessive data PDUs, after the transmitting device receives the status PDU, the excessive data PDUs need to be processed within certain time, causing a large processing delay. As a result, a rate spike can be easily caused, and an NR Media Access Control (MAC) layer may miss the time for assembling an MAC PDU. When the network is not aware of the MAC PDU, the network will mistakenly consider that a traffic volume of the transmitting end decreases, and therefore reduce authorization and affect an uplink velocity of the transmitting end. Thus, reliability of data PDU processing may become poor.

### SUMMARY

The present disclosure provides a protocol data unit processing method and device, a transmitting device, and a storage medium, so as to improve reliability of side link communication.

In a first aspect, an embodiment of the present disclosure provides a protocol data unit processing method applied to a transmitting device, including: receiving a status protocol data unit including data protocol data units; determining a processing capability for the data protocol data units in a current time unit according to capability parameters; and processing the data protocol data units in the current time unit and a next time unit according to the processing capability.

In a second aspect, an embodiment of the present disclosure further provides a protocol data unit processing device, including: a receiving module configured to receive a status protocol data unit including data protocol data units; a capability determining module configured to determine a processing capability for the data protocol data units in a current time unit according to capability parameters; and a processing module configured to process the data protocol data units in the current time unit and a next time unit according to the processing capability.

In a third aspect, an embodiment of the present disclosure further provides a transmission device, including: at least one processor; and a storage device configured to store at least one program, wherein, when executed by the at least one processor, the at least one program causes the at least one processor to carry out the protocol data unit processing method described above.

In a fourth aspect, an embodiment of the present disclosure further provides a computer-readable storage medium having a computer program stored thereon, and when the program is executed by a processor, the protocol data unit processing method described above is carried out.

The embodiments of the present disclosure provide the protocol data unit processing method, the protocol data unit processing device, the transmitting device, and the storage medium. The method includes: receiving the status protocol data unit including the data protocol data units; determining the processing capability for the data protocol data units in the current time unit according to the capability parameters; and processing the data protocol data units in the current time unit and the next time unit according to the processing capability. With the above technical solutions, the data protocol data units can be allocated to different time units according to the processing capability for processing, so as to avoid that excessive data protocol data units need to be processed within one time unit and reduce processing pressure in time units, thereby improving reliability of processing of the data protocol data units.

### BRIEF DESCRIPTION OF DRAWINGS

FIG. 1 is a flowchart illustrating a PDU processing method according to an embodiment of the present disclosure;
FIG. 2 is a schematic diagram of moments corresponding to capability parameters according to an embodiment of the present disclosure;
FIG. 3 is a flowchart illustrating a PDU processing method according to another embodiment of the present disclosure;
FIG. 4 is a schematic structural diagram of a PDU processing device according to an embodiment of the present disclosure; and
FIG. 5 is a schematic diagram of a hardware structure of a transmitting device according to an embodiment of the present disclosure.

### DETAIL DESCRIPTION OF EMBODIMENTS

The present disclosure is illustrated below by examples with reference to the drawings. It should be understood that specific embodiments described herein are merely used to explain the present disclosure, rather than limiting the present disclosure. It should be noted that the embodiments of the present disclosure and the features therein can be arbitrarily combined with each other if no conflict is incurred. It should be further noted that, for the convenience of description, merely some structures related to the present disclosure, but not all structures, are shown in the drawings.

As stated above, in the NR network, the status packet of the data plane may be lost. Taking a case where the UE processes and sends a status PDU of the network side as an example, when the network side issues the n^{th} status packet of the data plane and the UE loses the n^{th} status packet, the (n+1)^{th} status packet received next time includes the information contained in the n^{th} status packet. Therefore, the UE needs to process the two status packets together, and the number of the data PDUs which need to be processed is increased sharply. With excessive data PDUs to be processed, a large processing delay may be caused, and uplink authorized transmission may be affected. If network signals are unstable or the quality of the signals is poor, a bit error rate of the data PDUs is relatively high, and the status PDU may include the information of a plurality of failed data PDUs. When the UE receives such status PDU, the processing delay of the data PDUs may be increased, which affects the uplink authorized transmission. In addition, for some special network configurations, for example, the number of the transmitted status PDUs may be reduced in order to save NR resources. When one status PDU includes excessive data PDU information, the number of the data PDUs which need to be processed by the UE may be increased, and the processing delay of the data PDUs may also be increased, thereby affecting the uplink authorized transmission. In addition, one status PDU including excessive data PDU information may further cause the problems that instantaneous Central Processing Unit (CPU) occupancy is too high, a rate spike can be easily caused when the rate is recovered because the network reduces the UE authorization and the uplink velocity, and opportunities for authorized packet assembly are wasted because the authorized packet assembly cannot be executed.

The embodiments of the present disclosure provide a PDU processing method, which allows a transmitting device to allocate data PDUs to different time units according to processing capabilities for processing, so as to avoid that excessive data PDUs need to be processed within one time unit, and reduce processing pressure in the time units, thereby improving the reliability of the data PDU processing.

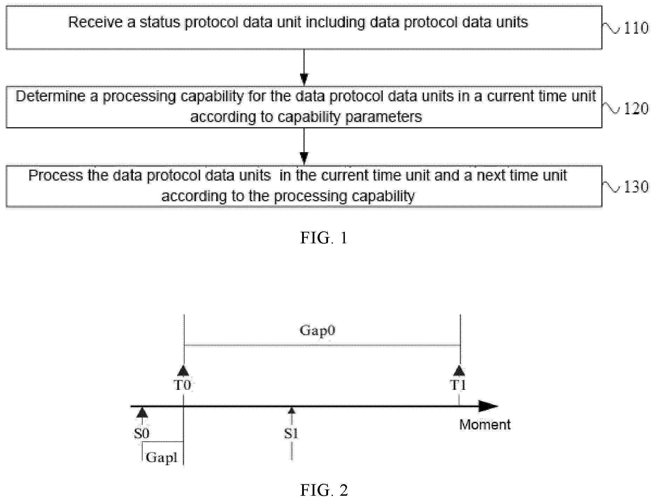

FIG. 1 is a flowchart illustrating a PDU processing method according to an embodiment of the present disclosure. As shown in FIG. 1, the method provided by this embodiment includes operation 110, operation 120, and operation 130.

In operation 110, a status PDU including data PDUs is received.

In operation 120, a processing capability for the data PDUs in a current time unit is determined according to capability parameters.

In this embodiment, the time unit may be a Transmission Time Interval (TTI) of the data PDUs. The processing capability for the data PDUs may be the maximum number of the data PDUs capable of being processed in the current time unit, or a data volume threshold. The data volume threshold is related to sizes of data fields of the data PDUs. The processing capability is determined according to the capability parameters, and the capability parameters are related to different moments in a data PDU processing process. For example, when the other parameters are fixed, the longer the gap between a receiving moment of the status PDU and an authorization moment T0 is, the stronger the processing capability is, the more the data PDUs capable of being processed in the current time unit are, the larger the processable data volume is. For example, the longer the gap between the authorization moment and a transmitting moment of the data PDUs is, the stronger the processing capability is, the more the data PDUs capable of being processed in the current time unit are, the larger the processable data volume is. In addition, the processing capability is also affected by an uplink velocity, a length of the time unit, CPU frequency characteristics, etc. The capability parameters may be configured by a network side or a terminal, or predefined by a protocol. The capability parameters or the processing capabilities corresponding to different time units may be the same or different.

In operation 130, the data PDUs are processed in the current time unit and a next time unit according to the processing capability.

In this embodiment, if the number of the data PDUs in the received status PDU is not too large and is within a range of the processing capability in the current time unit, all the data PDUs in the status PDU may be processed within the current time unit. If the number of the data PDUs in the received status PDU is too large and is beyond the range of the processing capability in the current time unit, part of the data PDUs may be processed in the next time unit, so as to avoid that the processing delay is made too large due to processing excessive data PDUs in one time unit. According to the processing capability for the data PDUs in the current time unit, the data PDUs in the status PDU can be processed in a way of evenly allocating the data PDUs to different time units, that is, the data PDUs in the status PDU can be subjected smooth processing, so that a problem of decrease in rate can be solved, and a phenomenon that uplink scheduling authorization misses transmitting timing can be avoided.

With no need to modify a communication protocol, the PDU processing method provided by this embodiment just needs a transmitting device itself to carry out smooth processing. The method is easy to carry out, and can be flexibly applied to a transmitting end of the UE or a transmitting end of the network side, and effectively improve reliability of data PDU processing.

In an embodiment, the operation 120 may further include:
operation 121: acquiring the capability parameters of the transmitting device, with the capability parameters being determined according to an authorization moment T0, a transmitting moment T1 of the data PDUs, a receiving moment S0 of the status PDU, an uplink velocity, CPU frequency characteristics, a TTI, and a Transport Block (TB) size;
and
operation 122: calculating the processing capability for the data PDUs according to the capability parameters.

In this embodiment, the capability parameters are acquired to be used as a basis for calculating the processing capability. The capability parameters are related to the following moments in the data PDU processing process: the receiving moment S0 of the status PDU, the authorization moment T0, and the transmitting moment T1 of the data PDUs. In addition, the capability parameters are also related to the CPU frequency characteristics of the transmitting device, the uplink velocity, the TTI, and the TB size.

In an embodiment, the capability parameters include: a first Gap0, which is a gap between the authorization moment T0 and the transmitting moment T1 of the data PDUs; a second Gap1, which is a gap between the receiving moment S0 of the status PDU and the authorization moment T0; the uplink velocity V; first parameters a and b, which are determined according to the CPU frequency characteristics; and second parameters c and d, which are determined according to the TTI, the TB size, and the CPU frequency characteristics.

FIG. 2 is a schematic diagram of moments corresponding to capability parameters according to an embodiment of the present disclosure. As shown in FIG. 2, description below is given by taking the UE processing and transmitting the status PDU of the network side as an example.
S0 represents the receiving moment of the status PDU, and the UE resolves a Physical Downlink Shared Channel (PDSCH) at S0 to obtain the status PDU;
S1 represents a moment when processing of all the data PDUs in the status PDU is completed;
T0 represents a moment when the UE resolves a Physical Downlink Control Channel (PDCCH) to obtain Downlink Control Information (DCI), that is, the authorization moment;
T1 represents the moment when the data PDUs are transmitted after the data PDUs are processed;
Gap0 represents the first gap, that is, the gap between the authorization moment and the transmitting moment of the data PDUs, and satisfies *Gap*0 *= T*1 - *T*0*;*
Gap1 represents the second gap, that is, the gap between the receiving moment of the status PDU and the authorization moment, and satisfies *Gap*1 = *T*0 - *S*0. Gap0 and Gap1 are acquired according to the scheduling of the network side to the UE.

In addition, the capability parameters further include the uplink velocity V, the first parameters, and the second parameters. The first parameters include a and b, are configured to represent a linear relationship between the time for processing the data PDUs and S, and may be determined according to the CPU frequency characteristics; and the second parameters include c and d, are configured to represent a linear relationship between the uplink velocity and packaging time, and may be determined according to the TTI, the TB size, and the CPU frequency characteristics.

In an embodiment, the processing capability for the data PDUs includes the maximum number of processable data PDUs; and the number of the remaining data PDUs is a difference between the number of the data PDUs in the status PDU and the maximum number of the processable data PDUs.

In this embodiment, the processing capability for the data PDUs is the maximum number of the data PDUs capable of being processed in the current time unit. If the number of the data PDUs included in the status PDU is greater than the maximum number of the data PDUs capable of being processed in the current time unit, the extra data PDUs need to be processed in the next time unit. For example, when the processing capability is the maximum number of the data PDUs capable of being processed in the current time unit, assuming that S=100 and the status PDU includes 110 data PDUs, then the first 100 data PDUs are capable of being normally processed in the current time unit; and after the 100^{th} data PDU is processed, the processing of the data PDUs in the current time unit is not continued, and the remaining 10 data PDUs are processed in the next time unit.

In an embodiment, in a case where the processing capability and the capability parameters satisfy a linear relationship, the processing capability is calculated by the formula (*Gap*0 + *Gap*1 *-* (*c* + *d* ∗ *V)* - *a*)/*b*.

In this embodiment, a derivation process of calculating the maximum number of the processable data PDUs according to the capability parameters is as follows:

Taking the case where the processing capability and the capability parameters satisfy the linear relationship as an example, after the data PDUs are processed and before the data PDUs are transmitted, the time for assembling an MAC PDU (the assembling time) is represented as *T*1 - *S*1, which satisfies: *T*1 - *S*1 = *Gap*0 - (*f*(*S*) - *Gap*1), where f(S) represents the time for processing S data PDUs, and satisfies *f*(*S*) = *a* + *b* ∗ *S*, and the coefficients a and b are determined according to the CPU frequency characteristics of the UE. In general, the time for processing the data PDUs and S satisfy a linear relationship.

The assembling time may also be calculated according to the uplink velocity and the second parameters, that is, *T*1 - *S*1 = *c* + *d* ∗ *V*, where the coefficients c and d are determined by configured TTI and TB size, and the CPU frequency characteristics of the UE. If the CPU of the UE is not tuned, *T*1 - *S*1 is equal to a fixed value. In general, the uplink velocity and the assembling time satisfy a linear relationship.

According to the above formulas, the processing capability in the current time unit (TTI), i.e., the maximum number S of the processable data PDUs satisfying *S* = (*Gap*0 + *Gap*1 - (*c* + *d* ∗ *V)* - *a*)/*b*, may be calculated.

In some embodiments, the processing capability and the capability parameters may also satisfy a nonlinear relationship, in which case the relationship between the processing capability and the capability parameters is complicated, and the calculation of the processing capability is not limited to the above formula. The formula for calculating the processing capability in the case of the nonlinear relationship is not specifically limited in this embodiment.

In an embodiment, the operation 130 of processing the data PDUs in the current time unit and the next time unit according to the processing capability may further include: if it is determined that the processed data PDUs reach the processing capability in the current time unit, processing the remaining data PDUs in the next time unit.

In this embodiment, if the processed data PDUs meet the processing capability in the current time unit, the processing of the data PDUs may be stopped, and the remaining data PDUs may be smoothly processed in the next time unit.

According to the PDU processing method provided by this embodiment, the processing capability of the transmitting device is accurately calculated by comprehensively considering the CPU frequency characteristics, the TTI, and the TB size according to the relationships between the different moments in the data PDU processing process and the various capability parameters, and is used as a reliable basis for smooth processing. Thus, the PDU processing method provided by this embodiment can avoid that the processing delay is made too large due to processing excessive data PDUs within one time unit, and can also avoid that processing efficiency in each time unit is affected by processing too few data PDUs within one time unit, thereby ensuring the efficiency and reliability of the processing of the data PDUs.

In an embodiment, the transmitting device is the user side or the network side, and the network side is further configured to allocate Data Radio Bearer (DRB) resources.

In this embodiment, the transmitting device may be the user side such as the UE, and the corresponding receiving device is the network side such as a base station; or the transmitting device may be the network side, and the corresponding receiving device is the user side. If the transmitting device is the network side, the transmitting device may be further configured to allocate resources for transmission of the status PDU.

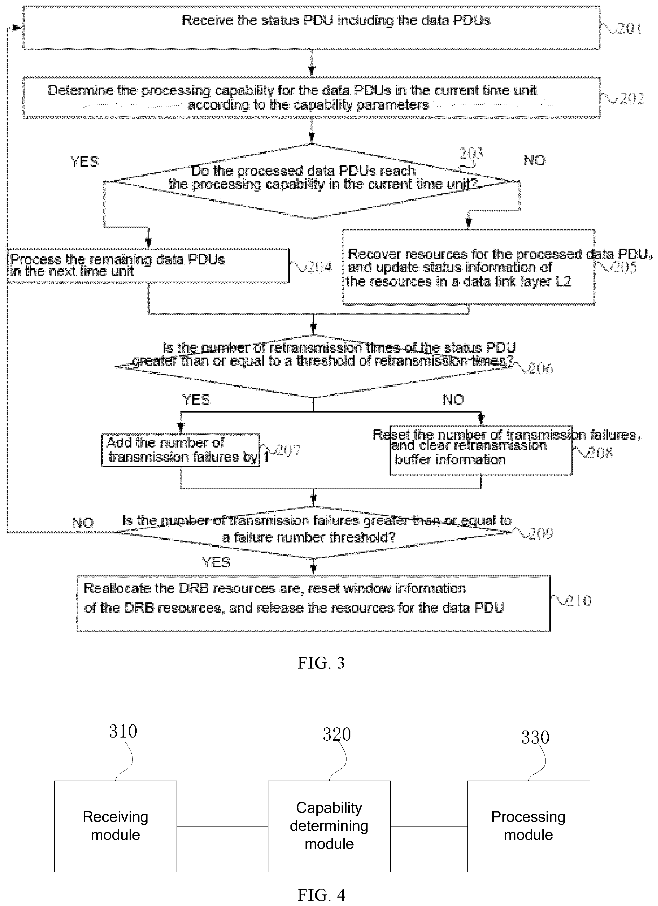

FIG. 3 is a flowchart of a PDU processing method according to another embodiment of the present disclosure. The PDU processing method provided by this embodiment is applicable to the transmitting device, and a smooth processing process of the data PDUs is specifically described below. On the basis that the data PDUs are subjected to the smooth processing, if the transmitting device is a device at the network side, a status PDU which fails to be transmitted may be subject to radio link failure processing in a processing of transmitting the status PDU, and available physical resources may be re-selected, so as to ensure reliable transmission and processing of the status PDU, thereby further increasing a peak rate.

As shown in FIG. 3, the method provided by this embodiment includes operations 201 to 210.

In operation 201, the status PDU including the data PDUs is received.

In operation 202, the processing capability for the data PDUs in the current time unit is determined according to the capability parameters.

In operation 203, it is determined whether the processed data PDUs meet the processing capability in the current time unit, and if the processed data PDUs meet the processing capability, operation 204 is performed; and if the processed data PDUs do not meet the processing capability, operation 205 is performed.

In operation 204, the remaining data PDUs are processed in the next time unit.

In operation 205, resources for the processed data PDU are recovered, and status information of the resources in a data link layer L2 is updated.

The data link layer is the second layer in the Open System Interconnection (OSI) reference model, is located between a physical layer and a network layer, and is configured to provide link resources for data transmission. In this embodiment, for the data PDUs within the range of the processing capability, after those data PDUs are processed in the current time unit, the transmitting device recovers the resources for the processed data PDUs, the recovered resources may be used for subsequent processing of the remaining data PDUs, and the status information of the resources in the data link layer L2 is updated. After the processing of the data PDUs in the current time unit is completed, the transmitting device transmits the processed status PDU to the receiving device.

In this embodiment, if one status PDU is not successfully transmitted to a peer device, the status PDU needs to be retransmitted. On the basis that the data PDUs are subjected to the smooth processing, if the transmitting device is the device at the network side, the transmitting device may determine when to perform resource reconfiguration according to the number of retransmission times of the status PDU in the process of transmitting the status PDU, so as to ensure the reliable transmission of the status PDU and avoid the problems of excessive data PDUs which need to be processed and the large processing delay caused by the loss of the status PDU.

In operation 206, it is determined whether the number of retransmission times of the status PDU is greater than or equal to a threshold of retransmission times, and if the number of retransmission times of the status PDU is greater than or equal to the threshold of retransmission times, operation 207 is performed; and if the number of retransmission times of the status PDU is less than the threshold of retransmission times, operation 208 is performed.

In operation 207, the number of transmission failures is added by 1.

In operation 208, the number of transmission failures is reset, and retransmission buffer information is cleared.

In this embodiment, if the number of retransmission times of the status PDU is greater than or equal to the threshold of retransmission times, it is determined that the transmission of the status PDU fails, and the number of transmission failures is added by 1; if the status PDU is successfully retransmitted before the threshold of retransmission times is reached, the number of transmission failures is reset, the retransmission buffer information is cleared, and the counting of the number of transmission failures is not continued. Based on the above, the subsequent operations may be executed when transmissions of a plurality of status PDUs fail continuously, otherwise, the operations 201 to 208 are performed again to continue to receive, process and transmit (and retransmit when the transmission fails) of the status PDUs.

In this embodiment, the threshold of retransmission times is set in advance or adopts a protocol-defined value. The smaller the threshold of retransmission times is, the easier a failed transmission of the status PDU is determined, the more frequently the resource reconfiguration is triggered, which can effectively increase a success rate of the transmission of the data PDUs, but can also cause higher signaling overhead and occupy more network resources; and the greater the threshold of retransmission times is, the harder the failed transmission of the status PDU is determined, which can prevent the resource reconfiguration from being performed frequently, and reduce the signaling overhead and the occupied network resources.

In operation 209, it is determined whether the number of transmission failures is greater than or equal to a failure number threshold, and if the number of transmission failures is greater than or equal to the failure number threshold, operation 210 is performed; and if the number of transmission failures is less than the failure number threshold, operation 201 is performed.

In operation 210, the DRB resources are reallocated, window information of the DRB resources is reset, and the resources for the data PDU are released.

In this embodiment, if the transmissions of the plurality of status PDUs fail continuously and the number of transmission failures reaches the failure number threshold, the reconfiguration of the DRB resources is triggered, and the data PDUs are retransmitted using the reconfigured DRB resources by resetting the window information of the DRB resources and releasing the resources for the data PDUs.

In this embodiment, the failure number threshold is set in advance or adopts a protocol-defined value. The smaller the failure number threshold is, the more frequently the resource reconfiguration is triggered, which can effectively increase the success rate of the transmission of the data PDUs, but can also cause higher signaling overhead and occupy more network resources; and when the failure number threshold becomes greater, the resource reconfiguration can be prevented from being performed frequently, and the signaling overhead and the occupied network resources can be reduced.

It should be noted that the order in which the operations 201 to 205 are performed and the order in which the operations 206 to 210 are performed are not limited in this embodiment. The operations 201 to 205 aim to perform the smoothing processing on the data PDUs in the status PDU to allocate the data PDUs to different time units for processing, so as to reduce (in the case where the status PDU is lost) the processing pressure in the time units and improve the reliability of the processing of the data PDUs; and the operations 206 to 210 aim to perform the resource reconfiguration according to the number of retransmission times and the number of transmission failures of the status PDUs in the process of transmitting the status PDU in the case where the transmitting device is the device at the network side, so as to ensure the reliable transmission of the status PDU, and avoid the excessive data PDUs which need to be processed and the large processing delay caused by the loss of the status PDU. Both the UE and the device at the network side may serve as the transmitting device or the receiving device of the status PDU. In the case where the transmitting device is the UE, the UE does not need to perform the operations 206 to 210.

According to the PDU processing method provided by this embodiment, by setting the threshold of retransmission times and the failure number threshold, the reconfiguration of the DRB resources can be triggered when the transmissions of the plurality of status PDUs fail continuously, so that the reliable transmission of the status PDU can be ensured, and the proliferation of the number of the data PDUs which need to be processed in a certain time unit caused by the loss of the status PDU can be avoided. In addition, the PDU processing method provided by this embodiment can further avoid that the reconfiguration of the DRB resources is triggered every time the retransmission is performed or the transmission fails, save the network resources, and increase resource use efficiency.

The embodiments of the present disclosure further provide a PDU processing device. FIG. 4 is a schematic structural diagram of a PDU processing device according to an embodiment. As shown in FIG. 4, the PDU processing device includes: a receiving module 310, a capability determining module 320, and a processing module 330.

The receiving module 310 is configured to receive a status PDU including data PDUs;

The capability determining module 320 is configured to determine a processing capability for the data PDUs in a current time unit according to capability parameters; and

The processing module 330 is configured to process the data PDUs in the current time unit and a next time unit according to the processing capability.

With the PDU processing device provided by this embodiment, according to the processing capability for the data PDUs in the current time unit, the data PDUs in the status PDU can be processed in a way of evenly allocating the data PDUs to different time units, that is, the data PDUs in the status PDU can be subjected to smooth processing. Thus, the PDU processing device provided by this embodiment can solve a problem of decrease in rate, and avoid a phenomenon that uplink scheduling authorization misses transmitting timing.

In an embodiment, the processing module 330 is specifically configured to:
if it is determined that processed data PDUs meet the processing capability in the current time unit, process the remaining data PDUs in the next time unit.

In an embodiment, the processing module 330 is specifically configured to:
if it is determined that the processed data PDUs do not meet the processing capability in the current time unit, recover resources for the processed data PDUs, and update status information of the resources in a data link layer L2.

In an embodiment, the processing capability for the data PDUs includes the maximum number of processable data PDUs.

The number of the remaining data PDUs is a difference between the number of the data PDUs in the status PDU and the maximum number of the processable data PDUs.

In an embodiment, the capability parameters include:
a first gap, which is a gap between an authorization moment T0 and a transmitting moment of the data PDUs;
a second gap, which is a gap between a receiving moment S0 of the status PDU and the authorization moment T0;
an uplink velocity;
first parameters determined according to CPU frequency characteristics; and
second parameters determined according to a TTI, a TB size, and the CPU frequency characteristics.

In an embodiment, in a case where the processing capability and the capability parameters satisfy a linear relationship, the processing capability is calculated by the formula (Gap0+Gap1-(c+d^{∗}V)-a)/b.

In an embodiment, a transmitting device is a user side or a network side, the user side and the network side are configured to transmit the status PDU, and the network side is further configured to allocate DRB resources.

In an embodiment, when the transmitting device is the network side, the device further includes:
a counting module configured to determine the number of transmission failures of the status PDU according to the number of retransmission times of the status PDU; and
an allocation module configured to reallocate the DRB resources if it is determined that the number of transmission failures is greater than or equal to a failure number threshold, reset window information of the DRB resources, and release the resources for the data PDUs.

In an embodiment, the counting module is specifically configured to:
if it is determined that the number of retransmission times of the status PDU is greater than or equal to a threshold of retransmission times, add 1 to the number of transmission failures; and
if it is determined that the number of retransmission times of the status PDU is less than the threshold of retransmission times, reset the number of transmission failures, and clear retransmission buffer information.

The PDU processing device proposed in this embodiment and the PDU processing method proposed in the above embodiments belong to the same inventive idea, the technical details which are not described in this embodiment can be found in any one of the above embodiments, and this embodiment can produce the beneficial effects the same as those produced by performing the PDU processing method.

The embodiments of the present disclosure further provide a transmitting device. The PDU processing method may be performed by a PDU processing device, which may be implemented as software and/or hardware, and integrated in the transmitting device. The transmitting device is a device at a network side or a UE.

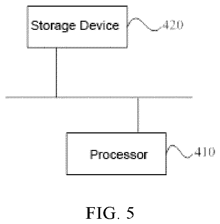

FIG. 5 is a schematic diagram of a hardware structure of a transmitting device according to an embodiment of the present disclosure. As shown in FIG. 5, the transmitting device provided by this embodiment includes: a processor 410 and a storage device 420. The transmitting device may include one or more processors (FIG. 5 illustrates an example where the transmitting device includes one processor 410). The processor 410 and the storage device 420 in the transmitting device may be connected to each other through a bus or by other means (FIG. 5 illustrates an example where the processor 410 and the storage device 420 are connected to each other through the bus).

One or more programs are executed by the one or more processors 410, so that the one or more processors are caused to carry out the PDU processing method described in any one of the above embodiments.

As a computer-readable storage medium, the storage device 420 in the transmitting device may be configured to store the one or more programs. The programs may be software programs, computer-executable programs and modules such as program instructions/modules (e.g., the modules in the PDU processing device shown in FIG. 4, which include: the receiving module 310, the capability determining module 320, and the processing module 330) corresponding to the PDU processing method described in the embodiments of the present disclosure. By executing the software programs, instructions and modules stored in the storage device 420, the processor 410 performs various functional applications and data processing of the transmitting device, that is, carrying out the PDU processing method described in the above embodiments of the present disclosure.

The storage device 420 mainly includes a program storage region and a data storage region, and the program storage region is capable of storing an operating system, and at least one application program needed by functions; and the data storage region is capable of storing data (such as the capability parameters and the data PDUs described in the above embodiments) created according to use of the device. Further, the storage device 420 may include a high-speed random access memory, and may also include a non-volatile memory, such as at least one magnetic storage device, a flash memory, or other non-volatile solid-state memories. In some examples, the storage device 420 may further include a memory remotely arranged relative to the processor 410, and the remote memory may be connected to the transmitting device via a network. The examples of the above network include, but are not limited to, the Internet, an intranet, a local area network, a mobile communication network, and the combinations thereof.

In addition, when the one or more programs included in the transmitting device are executed by the one or more processors 410, the following operations are performed: receiving a status PDU including data PDUs; determining a processing capability for the data PDUs in a current time unit according to capability parameters; and processing the data PDUs in the current time unit and a next time unit according to the processing capability.

The transmitting device proposed in this embodiment and the PDU processing method proposed in the above embodiments belong to the same inventive idea, the technical details which are not described in this embodiment can be found in any one of the above embodiments, and this embodiment can produce the beneficial effects the same as those produced by performing the PDU processing method.

The embodiments of the present disclosure further provide a storage medium including computer-executable instructions, which are configured to carry out a PDU processing method when executed by a computer processor. The method includes: receiving a status PDU including data PDUs; determining a processing capability for the data PDUs in a current time unit according to capability parameters; and processing the data PDUs in the current time unit and a next time unit according to the processing capability.

Through the above description of the embodiments, those of ordinary skill in the art can understand that the present disclosure may be implemented by means of software plus general hardware, or may also be implemented by hardware. Based on such understanding, the technical solutions of the present disclosure may be embodied in the form of software products, which may be stored in a computer-readable storage medium, such as a computer floppy disk, a Read-Only Memory (ROM), a Random Access Memory (RAM), a flash memory (FLASH), a hard disk or an optical disk, and include a plurality of instructions for causing a computer device (which may be a personal computer, a server, a network device, etc.) to perform the method described in any embodiment of the present disclosure.

The description above is merely of the exemplary embodiments of the present disclosure, but is not intended to limit the scope of the present disclosure.

A block diagram illustrating any logic flow in the drawings of the present disclosure may show operations of a program, or interconnected logic circuits, modules and functions, or a combination of the operations of the program and the logic circuits, modules and functions. The computer program can be stored on the memory. The memory may be in any type suitable to local technical environment and may be implemented using any suitable data storage technology. For example, the memory is, but not limited to, an ROM, an RAM, and an optical storage device and system (a Digital Video Disc (DVD) or a Compact Disc (CD)). The computer-readable medium may include a non-transitory storage medium. The data processor may be in any type suitable to the local technical environment. For example, the data processor is, but not limited to, a general-purpose computer, a special purpose computer, a microprocessor, a Digital Signal Processors (DSP), an Application Specific Integrated Circuit (ASIC), a Field Programmable Gate Array (FGPA) and a processor based on multi-core architecture.

The exemplary embodiments of the present disclosure are illustrated in detail above by exemplary and non-limiting examples. For those of ordinary skill in the art, various modifications and adjustments to the above embodiments can be obviously derived from the drawings and the appended claims, but those modifications and adjustments are not beyond the scope of the present disclosure. Therefore, the proper scope of the present disclosure is defined by the appended claims.

## Claims

1. A protocol data unit processing method applied to a transmitting device, comprising:
receiving a status protocol data unit comprising data protocol data units;
determining a processing capability for the data protocol data units in a current time unit according to capability parameters; and
processing the data protocol data units in the current time unit and a next time unit according to the processing capability.

2. The method of claim 1, wherein processing the data protocol data units in the current time unit and the next time unit according to the processing capability comprises:
responsive to determining that processed data protocol data units reach the processing capability in the current time unit, processing remaining data protocol data units in the next time unit.

3. The method of claim 1, wherein processing the data protocol data units in the current time unit and the next time unit according to the processing capability comprises:
responsive to determining that processed data protocol data units do not reach the processing capability in the current time unit, recovering resources for the processed data protocol data units, and updating status information of the resources in a data link layer L2.

4. The method of claim 2, wherein the processing capability comprises the maximum number of processable data protocol data units; and
the number of the remaining data protocol data units is a difference between the number of the data protocol data units in the status protocol data unit and the maximum number of the processable data protocol data units.

5. The method of claim 1, wherein the capability parameters comprise:
a first Gap0, which is a gap between an authorization moment T0 and a transmitting moment T1 of the data protocol data units;
a second Gap1, which is a gap between a receiving moment S0 of the status protocol data unit and the authorization moment T0;
an uplink velocity V;
first parameters a and b, which are determined according to Central Processing Unit, CPU, frequency characteristics; and
second parameters c and d, which are determined according to a transmission time interval, a transport block size, and the CPU frequency characteristics.

6. The method of claim 5, wherein, in a case where the processing capability and the capability parameters satisfy a linear relationship, the processing capability is calculated by a formula (*Gap*0 + *Gap*1 - (*c* + *d* ∗ *V)* - *a*)/*b*.

7. The method of any one of claims 1 to 6,
the transmitting device is a user side or a network side, and the user side or the network side is configured to transmit the status protocol data unit;
wherein the network side is further configured to allocate Data Radio Bearer, DRB, resources.

8. The method of claim 7, wherein, when the transmitting device is the network side, the method further comprises:
determining the number of transmission failures of the status protocol data unit according to the number of retransmission times of the status protocol data unit; and
responsive to determining that the number of transmission failures is greater than or equal to a failure number threshold, reallocating the DRB resources, resetting window information of the DRB resources, and releasing the resources for the data protocol data units.

9. The method of claim 8, wherein determining the number of transmission failures of the status protocol data unit according to the number of retransmission times of the status protocol data unit comprises:
responsive to determining that the number of retransmission times of the status protocol data unit is greater than or equal to a threshold of retransmission times, adding 1 to the number of transmission failures; and
responsive to determining that the number of retransmission times of the status protocol data unit is less than or the threshold of retransmission times, resetting the number of transmission failures, and clearing retransmission buffer information.

10. A protocol data unit processing device, comprising:
a receiving module configured to receive a status protocol data unit comprising data protocol data units;
a capability determining module configured to determine a processing capability for the data protocol data units in a current time unit according to capability parameters; and
a processing module configured to process the data protocol data units in the current time unit and a next time unit according to the processing capability.

11. A transmitting device, comprising:
at least one processor; and
a storage device configured to store at least one program,
wherein when executed by the at least one processor, the at least one program causes the at least one processor to carry out the protocol data unit processing method of any one of claims 1 to 9.

12. A computer-readable storage medium having a computer program stored thereon, wherein, when the program is executed by a processor, the protocol data unit processing method of any one of claims 1 to 9 is carried out.
